# EUROPEAN PATENT APPLICATION

(11) **EP 3 163 651 A1**
(43) Date of publication of application: **03.05.2017**
(21) Application number: 16166594.8
(22) Date of filing: 22.04.2016
(51) Int. Cl.: H01M 2/14, H01M 2/16, H01M 2/02, H01M 10/42

(54) **FILM FOR PREVENTING INTERNAL SHORT-CIRCUIT AND BATTERY HAVING THE SAME**

(30) Priority: 29.10.2015 KR 20150151407
(71) Applicant: Hyundai Motor Company, Seoul 06797 (KR)
(72) Inventor: WOO, Jung Je, 10300 Goyang-si, Gyeonggi-do (KR); SHIN, Woo Jin, 06335 Seoul (KR)
(74) Representative: Viering, Jentschura & Partner mbB Patent- und Rechtsanwälte

(57) **Abstract**

Disclosed are a film for preventing an internal short-circuit and a battery comprising the same. In particular when a conductive object having a sharp end portion penetrates through the battery, the film may prevent an internal short-circuit which may occur in the battery. The film includes: a mesh structure comprising a plurality of pores and a plurality of strands and the strands are made of an insulating material.

## Description

### CROSS-REFERENCE TO RELATED APPLICATION

This application is based on and claims the benefit of priority to Korean Patent Application No. 10-2015-0151407, filed on October 29, 2015 in the Korean Intellectual Property Office, the disclosure of which is incorporated herein in its entirety by reference.

### TECHNICAL FIELD

The present invention relates to a battery and a film for preventing an internal short-circuit in the battery. In particular, the film may prevent the internal short-circuit that may occur in a battery when a conductive object having a sharp end portion penetrates through the battery.

### BACKGROUND

A battery for driving a motor has been installed in an eco-friendly vehicle such as an electric vehicle, a hybrid vehicle, or the like. The battery of the eco-friendly vehicle as described above typically has been a secondary battery.

In such battery, an energy density should be improved in order to increase a traveling distance, and safety capable of preventing explosion of the battery should be necessarily secured.

However, the energy density and the safety may be in a contradictory relationship with each other. For example, when structures of an electrode and a separator are changed in order to improve safety, the energy density of the battery may be decreased and internal resistance may be increased.

Particularly, when a conductive object having a sharp end portion such as a pin, or the like, penetrates through the battery due to vehicular accidents, or the like, an electrical short-circuit may occur between a cathode and an anode through the conductive object in the battery, such that a high current may instantly flow to increase a temperature in the vicinity of the conductive object, thereby causing an explosion reaction of the battery.

The above description in the related arts is intended merely to aid in the understanding of the background of the present invention, and is not intended to mean that the present invention falls within the purview of the related art that is already known to those skilled in the art.

### SUMMARY

In preferred aspects, the present invention provides a film for preventing an internal short-circuit in a battery by preventing a physical contact between a conductive object and an electrode when the conductive object having a sharp end portion penetrates through the battery, and a battery comprising the film.

In one aspect, a film for preventing an internal short-circuit of a battery may include a mesh structure comprising a plurality of pores and a plurality of strands. The plurality of the pore may be formed between the plurality of the strands by weaving the plurality of the strands, and the strands may comprise an insulating material.

The term "film" as used herein refers to a layer of material and the film may suitably have a thickness less than about 1 mm, less than about 900 µm, less than about 800 µm, less than about 700 µm, less than about 600 µm, or particularly ranging from about 30 to about 500µm. In addition, the film as used herein may have suitable flexibility such that the film may be curved, bent, warped, or folded when a force is applied thereto without causing damages or breakage thereof.

The term "mesh structure" as used herein refers to a material or fabric made from threads, strands, or wires, which may interlaces to form a woven structure as allowing spaces between the interlacing threads, strands, or wires thereby forming holes, spaces or pores. The mesh structure in the present application may not be particularly limited to weaving processes.

The term "pore", as used herein, refers to a space or a vacancy formed in a woven material, *i.e*. mesh structure. A size of the pores is not particularly limited, and suitably may vary from about 1 to 50 µm, from about 50 to 500 µm, or particularly from about 1 to 500 µm, based on the weaving process for producing the above mesh structure using the strands. In addition, a shape of the pores is not particularly limited, and suitably may be formed in two- or three dimensions, according to the weaving process, for example, plain square structure, a plain reverse dutch structure, a twill weave structure, and a stain weave structure, or a combination of two or more without limitation. A diameter of the strand may suitably range from about 25 to about 500 µm, and a width of the pore may suitably range from about 1 to 500µm.

Preferably, the strand may comprise synthetic fiber.

The strand may suitably comprise at least one selected from the group consisting of polyethylene terephthalate (PET), polyamide (PA), polyether ether ketone (PEEK), polytetrafluoroethylene (PTFE), and polyvinylidene fluoride (PVDF), and a combination of two or more thereof.

The mesh structure may be at least any one of a plain square structure, a plain reverse dutch structure, a twill weave structure, and a stain weave structure, or a combination of two or more thereof.

A diameter of the strand may suitably range from about 25 to about 500 µm, and a width of the pore may suitably range from about 1 to 500µm.

A thickness of the mesh structure may suitably range from about 30 to about 500 µm.

In another aspect, the present invention provides a battery. The battery may include: at least one electrode assembly; a case covering an exterior of the electrode assembly; and a film for preventing an internal short-circuit provided in order to prevent the internal short-circuit. Each electrode may comprise a separator and two electrodes each of which is disposed on each surface of the separator. In particular, the film may have a mesh structure comprising a plurality of pores and a plurality of strands. The plurality of the pore may be formed between the plurality of the strands by weaving the plurality of the strands, and the strands may comprise an insulating material.

The film for preventing an internal short-circuit may be attached to at least a portion of a surface of the electrode assembly.

In addition, the film for preventing an internal short-circuit may be interposed between the electrode assembly and the case.

Alternatively, the film for preventing an internal short-circuit may be attached to at least a portion of a surface of the case.

When the battery includes a plurality of the electrode assemblies, the film for preventing an internal short-circuit may be interposed between each the electrode assembly.

Further provided is a vehicle that may comprise the battery as described herein, and in particular, the battery may comprises the film for preventing an internal short-circuit as described herein.

In another aspect, the present invention provides a method of producing a film for a battery. The method may comprise weaving a plurality of strands comprising an insulating material to provide a mesh structure. In particular, a plurality of pores may be formed between the plurality of the strands.

Preferably, the strand may comprise synthetic fiber.

The strand may suitably comprise at least one selected from the group consisting of polyethylene terephthalate (PET), polyamide (PA), polyether ether ketone (PEEK), polytetrafluoroethylene (PTFE), and polyvinylidene fluoride (PVDF), and a combination of two or more thereof.

The mesh structure may be at least any one of a plain square structure, a plain reverse dutch structure, a twill weave structure, and a stain weave structure, or a combination of two or more thereof.

A diameter of the strand may suitably range from about 25 to about 500µm, and a width of the pore may suitably range from about 1 to 500µm.

A thickness of the mesh structure may suitably range from about 30 to about 500µm.

Other aspects of the present invention are disclosed infra.

### BRIEF DESCRIPTION OF THE DRAWINGS

The above and other objects, features and advantages of the present disclosure will be more apparent from the following detailed description taken in conjunction with the accompanying drawings.
FIG. 1 illustrates an exemplary battery according to an exemplary embodiment of the present invention.
FIG. 2 illustrates a plan view of an exemplary film for preventing an internal short-circuit according to an exemplary embodiment of the present invention.
FIG. 3 illustrates an exemplary state in which a conductive object having a sharp end portion penetrates through a mesh structure of the film for preventing an internal short-circuit according to an exemplary embodiment of the present invention.
FIG. 4 shows an enlarged view of an exemplary mesh structure of an exemplary film for preventing an internal short-circuit according to an exemplary embodiment of the present invention.

### DETAILED DESCRIPTION

The terminology used herein is for the purpose of describing particular exemplary embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

Hereinafter, various exemplary embodiments of the present invention will be described in detail with reference to the accompanying drawings. For reference, sizes of component illustrated in the accompanying drawings referred in the present invention, thicknesses of lines, and the like, may be exaggerated for convenience of understanding. In addition, the following terminologies used herein are defined in consideration of the functions in the present disclosure and may be construed in different ways by the intention of users and operators, customary practices, or the like. Therefore, the definitions of terms used in the present description should be construed based on the contents throughout the specification.

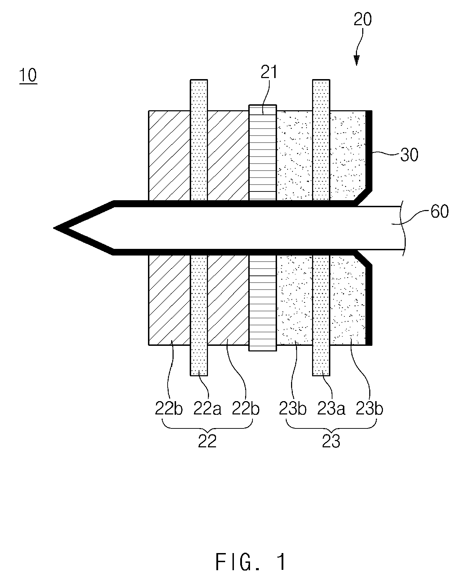

FIG. 1 illustrates an exemplary electrode assembly of an exemplary battery according to an exemplary embodiment of the present invention.

As shown in FIG. 1, a battery 10 may include an electrode assembly 20 and an a case (not illustrated) covering the electrode assembly 20.

The electrode assembly 20 may include a separator 21 and two electrodes, *i*.*e*., a cathode 22 and an anode 23, each of which are disposed on each surface of the separator 21.

The cathode 22 comprises a cathode current collector 22a, a cathode active material 22b, and the like, and the anode 23 comprises of an anode current collector 23a, an anode active material 23b, and the like.

In addition, a film 30 for preventing an internal short-circuit may be disposed in the battery 10, and film 30 may prevent an electrical short-circuit (internal short-circuit) between the cathode 22 and the anode 23, which may be caused when a conductive object 60 having a sharp end portion penetrates through the electrode assembly 20.

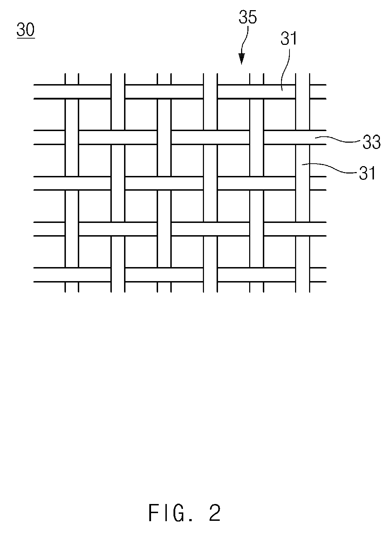

The film 30 for preventing an internal short-circuit may include a mesh structure 35 in which a plurality of pores 33 are formed by weaving a plurality of strands 31 as illustrated in FIG. 2.

According to the present invention, as the film 30 for preventing an internal short-circuit is formed of the mesh structure 35 as described above, when the conductive object 60 penetrates through the electrode assembly 20 as illustrated in FIG. 1, the sharp end portion of the conductive object 60 may be inserted into the pore 33 of the mesh structure, and at a same time, the strands 31 around the pore 33 may block the conductive object 60, thereby preventing the pore 33 from being excessively expanded. Accordingly, the film 30 for preventing an internal short-circuit may be inserted into the electrode assembly 20 of the battery 10 together with the conductive object 60, thereby surely preventing the electrical short-circuit between the cathode 22 and the anode 23.

The strand 31 may comprise an insulating material such as a synthetic fiber.

Particularly, since the film 30 is formed of the mesh structure 35, the film 30 may not be easily penetrated by the conductive object 60, such that the strand 31 may be made of cheap synthetic fiber.

For example, the strand 31 may comprise at least one selected from the group consisting of polyethylene terephthalate (PET), polyamide (PA), polyether ether ketone (PEEK), polytetrafluoroethylene (PTFE), and polyvinylidene fluoride (PVDF), and a combination of two or more thereof.

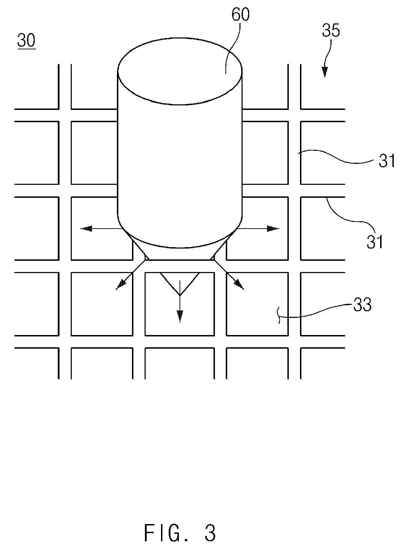

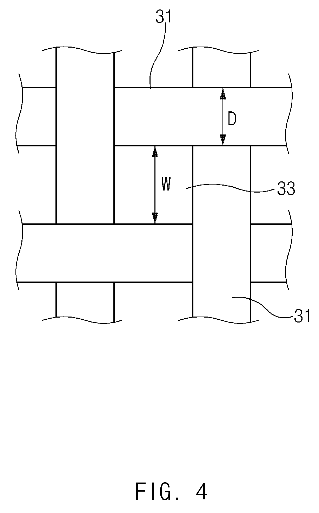

Further, although a plain square mesh structure 35 is illustrated in FIGS. 2 to 4, the mesh structure 35 may not be limited thereto.

For example, the mesh structure 35 may have at least any one of a plain square structure, a plain reverse dutch structure, a twill weave structure, and a stain weave structure, or a combination of two or more thereof.

In addition, a diameter D of the strand 31 may range from about 25 to about 500µm, a width W of the pore 33 may range from about 1 to about 500µm, and a thickness of the mesh structure 35 may range from about 30 to about 500µm.

Alternatively, as illustrated in FIG. 1, the film 30 for preventing an internal short-circuit may be attached to one surface of the electrode assembly 20.

In addition, the film 30 for preventing an internal short-circuit may be attached to a surface of the case covering the electrode assembly 20.

Further, the film 30 for preventing an internal short-circuit may be interposed between the electrode assembly 20 and the case.

Further, when the battery comprises a plurality of electrode assemblies 20 stacked therein, the film 30 for preventing an internal short-circuit may be interposed between each the electrode assembly 20.

The battery 10 may have various structures. For example, one or more electrode assemblies 20 may be stacked in a battery cell, and one or more battery cells may be connected to each other in series or in parallel to form a battery module, a battery pack, or the like.

The battery cell in which one or more electrode assemblies 20 are stacked may be sealed in the case, such that the battery 10 may be configured as a unit cell. When the battery is configured as the unit cell, the film 30 for preventing an internal short-circuit may be attached to a surface of the electrode assembly 20 or the case.

Further, when the battery 10 is the battery module or the battery pack by connecting a plurality of battery cells to each other in series or in parallel, the film 30 for preventing an internal short-circuit may be attached to a surface of the battery module or the battery pack, or interposed between the battery cells.

In addition, the battery 10 may be a pouch type battery in which the electrode assembly 20 is configured in a jelly-roll structure, and the case may be formed in a pouch shape. In the case of the pouch type battery as described above, the film 30 for preventing an internal short-circuit may be interposed between the electrode assembly 20 and the case.

The present invention may also a method of producing the film for the battery as described above. For example, the plurality of the strands comprising an insulating material may be woven to provide a mesh structure such that the plurality of pores may be formed between the plurality of the strands. The weaving process may not be particularly limited, and the size or shape of the pores may vary based on the weaving processes.

### EXAMPLE

Hereinafter, the film for preventing an internal short-circuit will be described in detail through Examples and Comparative Examples, but the scope of the film for preventing an internal short-circuit is not limited thereto.

### Example 1

A film for preventing an internal short-circuit, having a thickness of 90µm and a mesh structure was manufactured using polyamide (PA).

### Example 2

A film for preventing an internal short-circuit, having a thickness of 55µm and a mesh structure was manufactured using polyethylene terephthalate (PET).

### Example 3

A film for preventing an internal short-circuit, having a thickness of 75µm and a mesh structure was manufactured using polyether ether ketone (PEEK).

### Comparative Example 1

A porous film for preventing an internal short-circuit, having a thickness of 40µm was manufactured using polyethylene (PE).

### Comparative Example 2

A film for preventing an internal short-circuit, having a thickness of 100µm was manufactured using non-woven fabric made of polyethylene terephthalate (PET).

The following Table 1 illustrates results obtained by testing whether or not a short-circuit occurred when a spike having a diameter of 5mm penetrated at a speed of 80mm/sec toward each of the films of Examples and Comparative Examples as described above was installed in a battery.

**[Table 1]**

| | Structure (Material, Thickness) | Short-circuit |
|---|---|---|
| Example 1 | Mesh Structure (PA, 90*µ*m) | Short-circuit was prevented |
| Example 2 | Mesh Structure (PET, 55*µ*m) | Short-circuit was prevented |
| Example 3 | Mesh Structure (PEEK, 75*µ*m) | Short-circuit was prevented |
| Comparative Example 1 | Porous Structure (PE, 40*µ*m) | Short-circuit |
| Comparative Example 2 | Non-woven Fabric (PET, 100*µ*m) | Short-circuit |

As illustrated in Table 1, it may be appreciated that the films for preventing an internal short-circuit of Examples 1 to 3 were formed of the mesh structure, at the time of performing the penetration test, the films for preventing an internal short-circuit were pushed into the battery to thereby prevent an internal short-circuit. On the contrary, when the films were formed in the porous or non-woven fabric film for Comparative Examples 1 and 2 using based on polyethylene or polyethylene terephthalate instead of the mesh structure, at the time of performing the penetration test, the films for preventing an internal short-circuit were not pushed into the battery, such that the films may not prevent an internal short-circuit.

According to the present invention, when the conductive object having the sharp end portion penetrates through the battery, a current from flowing between the cathode and the anode in the battery may be blocked by blocking a physical contact between the conductive object and the electrodes, thereby preventing explosion of the battery, which may occur in accordance with an increase in a temperature around the conductive object.

Hereinabove, although the present disclosure has been described with reference to exemplary embodiments and the accompanying drawings, the present invention is not limited thereto, but may be variously modified and altered by those skilled in the art to which the present invention pertains without departing from the spirit and scope of the present invention claimed in the following claims.

## Claims

1. A film for a battery, comprising:
a mesh structure comprising a plurality of pores and a plurality of strands,
wherein the plurality of the pores are formed between the plurality of the strands by weaving the plurality of the strands,
wherein the strands comprise an insulating material.

2. The film of claim 1, wherein the strand comprises synthetic fiber.

3. The film of claim 1 or 2, wherein the strand comprises at least one selected from the group consisting of polyethylene terephthalate (PET), polyamide (PA), polyether ether ketone (PEEK), polytetrafluoroethylene (PTFE), and polyvinylidene fluoride (PVDF), and a combination of two or more thereof.

4. The film of any one of claims 1 to 3, wherein the mesh structure is at least any one of a plain square structure, a plain reverse dutch structure, a twill weave structure, and a stain weave structure, or a combination of two or more thereof.

5. The film of any one of claims 1 to 4, wherein a diameter of each the strand ranges from about 25 to about 500µm, and a width of each the pore ranges from about 1 to about 500µm.

6. The film of any one of claims 1 to 5, wherein a thickness of the mesh structure ranges from about 30 to about 500µm.

7. A battery comprising:
at least one electrode assembly, each electrode assembly comprising a separator and two electrodes each of which is disposed on each surface of the separator;
a case covering an exterior of the electrode assembly; and
a film for preventing an internal short-circuit in the battery,
wherein the film comprises a mesh structure that comprises a plurality of pores and a plurality of strands,
wherein the plurality of the pore are formed between the plurality of the strands by weaving the plurality of the strands.

8. The battery according to claim 7, wherein the film is attached to at least a portion of a surface of the electrode assembly.

9. The battery according to claim 7 or 8, wherein the film is interposed between the electrode assembly and the case.

10. The battery according to claim 7, wherein the film is attached to at least a portion of a surface of the case.

11. The battery according to any one of claims 7 to 10, wherein the battery comprises a plurality of the electrode assemblies, and the film is interposed between each the electrode assembly.

12. A vehicle comprising a battery of any one of the claims 7 to 11.
